# FASCICULE DE BREVET EUROPEEN

(11) **EP 4 544 164 B1**
(45) Date de publication et mention de la délivrance du brevet: **24.06.2026**
(21) Numéro de dépôt: 23727399.0
(22) Date de dépôt: 04.05.2023
(51) Int. Cl.: F02D 11/10, F02D 41/00, F02D 41/14, G05B 13/00, G05B 13/04

(54) **PROCÉDÉ DE RÉGLAGE D'UN ASSERVISSEMENT EN POSITION D'UN ACTIONNEUR, TEL QU'UN ACTIONNEUR DE VÉHICULE AUTOMOBILE**
VERFAHREN ZUR EINSTELLUNG EINER POSITIONSSERVOSTEUERUNG EINES AKTUATORS, WIE ETWA EINES KRAFTFAHRZEUGAKTUATORS
METHOD FOR ADJUSTING A POSITION SERVO-CONTROL OF AN ACTUATOR, SUCH AS A MOTOR VEHICLE ACTUATOR

(30) Priorité: 27.06.2022 FR 2206378
(43) Date de publication de la demande: 30.04.2025
(73) Titulaire: Stellantis Auto SAS, 78300 Poissy (FR)
(72) Inventeur: ACHIR, Ali, 78955 CARRIERES SOUS POISSY (FR); COTTE, Anthony, 78150 LE CHESNAY (FR); CUSTODIO JOAO, Victor, 78670 VILLENNES SUR SEINE (FR)
(74) Mandataire: PSIP
(86) Numéro de dépôt international: PCT/FR2023/000077
(87) Numéro de publication internationale: WO 2024/003471

(56) Documents cités:
- EP-A1- 3 341 604
- EP-B1- 3 341 604
- FR-A1- 2 876 153
- FR-A3- 2 944 561
- JP-A- 2010 019 105

## Description

L'invention concerne de manière générale le domaine des asservissements de position des actionneurs. Plus particulièrement, l'invention se rapporte à un procédé mis en œuvre par ordinateur de réglage d'un asservissement en position d'un actionneur, tel qu'un actionneur dans un véhicule automobile.

Les actionneurs commandés en position sont très utilisés dans les véhicules de type thermique pour le pilotage de leur groupe motopropulseur. Un réglage précis de la commande de ces actionneurs contribue à une optimisation du fonctionnement du groupe motopropulseur, notamment pour ce qui est du rendement de celui-ci, de l'agrément de conduite et du respect des normes antipollution. A titre d'exemples d'actionneurs, on peut citer des actionneurs présents dans la boucle d'admission d'air d'un moteur thermique de véhicule, comme ceux dans la vanne de recirculation des gaz d'échappement, dite vanne EGR, le boîtier de papillon des gaz, la soupape de décharge d'un turbocompresseur et autres.

Les actionneurs utilisés dans les véhicules sont fabriqués en grandes quantités et ont fréquemment des caractéristiques relativement dispersées. Par ailleurs, ils sont assujettis à des frottements secs importants, de l'encrassement, des variations de température et des efforts aérauliques rendant leur asservissement délicat et complexe.

Dans l'état de l'art, il est connu d'utiliser une méthode dite du « régleur », par essai et erreur, pour régler le correcteur de l'asservissement de commande en position jusqu'à obtenir la réponse souhaitée du système. Cette méthode nécessite un grand nombre d'essais physiques jusqu'à obtenir la performance voulue, ainsi qu'un savoir-faire important et de l'expérience pratique. Cependant, elle ne garantit pas la robustesse des performances obtenues. Il est nécessaire de réaliser des essais supplémentaires de validation avec des systèmes dispersés et des conditions extérieures variables, comme l'altitude et la température, pour s'assurer de la robustesse des performances.

Les actionneurs sont habituellement pilotés par un calculateur, avec des techniques de commande issues de l'automatique avancée, en exploitant des algorithmes de commande modernes du type retour d'état, polynomiale, adaptative ou autres. La mise en œuvre des algorithmes de commande avancés susmentionnés requiert la plupart du temps un modèle mathématique dynamique du système à commander. Une première approche utilisée par l'homme du métier est de construire un modèle dynamique dit de « connaissance » en appliquant directement les lois de la physique. Cette approche nécessite une connaissance parfaite des éléments constitutifs du système à commander. De plus, elle demande de nombreux essais physiques pour adapter les paramètres du modèle, de façon à obtenir une représentation fidèle de la réponse du système réel. Une autre approche moins coûteuse est d'identifier un modèle mathématique dit de « comportement » à partir de la connaissance uniquement des entrées et des sorties du système à commander.

L'identification d'un modèle dynamique pour les actionneurs de la boucle d'admission d'air présente des complexités inhérentes comme une réponse en boucle ouverte divergente, des frottements secs prépondérants et un retard pur. Ainsi, en boucle ouverte, pour une entrée constante, le comportement divergent de l'actionneur se traduit par une sortie qui augmente continuellement jusqu'à atteindre des butées mécaniques du système. Les frottements secs empêchent l'algorithme d'identification du modèle mathématique de converger vers les bons paramètres de celui-ci. L'identification du retard pur est essentielle dans la synthèse des asservissements de position, en permettant d'augmenter considérablement les performances obtenues, ainsi que leur robustesse.

Par le document EP3341604A1, il est connu un système d'asservissement d'un actionneur à une consigne de position, dans lequel est intégré un compensateur de retard pur.

L'invention vise à apporter une solution à la problématique exposée ci-dessus de l'état de la technique notamment pour les actionneurs commandés en position dans la boucle d'admission d'air d'un véhicule thermique, en fournissant un procédé mis en œuvre par ordinateur de réglage d'un asservissement de position d'un actionneur, grâce à une identification aisée et automatisable d'un modèle dynamique comportemental de l'actionneur du type fonction de transfert du second ordre avec un retard pur.

Selon un premier aspect, l'invention concerne un procédé mis en œuvre par ordinateur de réglage d'un dispositif d'asservissement en position d'un actionneur comprenant une phase d'identification d'un modèle mathématique de l'actionneur sous la forme d'une première fonction de transfert du second ordre avec un retard pur d et une phase de calcul d'un correcteur du dispositif d'asservissement en position en utilisant le modèle mathématique identifié. Conformément à l'invention, la phase d'identification comprend les étapes de a) commander l'actionneur dans un système en boucle fermée avec une consigne en échelon et en appliquant un signal vibratoire anti-frottement, le système en boucle fermée comprenant un simple correcteur proportionnel et étant modélisé mathématiquement sous la forme d'une deuxième fonction de transfert du second ordre avec le retard pur d ; b) déterminer des paramètres de gain statique K, d'amortissement Π, de pulsation naturelle Ωₙ et de retard pur d de la deuxième fonction de transfert à partir de mesures sur un signal de position sortant du système en boucle fermée délivré par celui-ci en réponse à la commande avec la consigne en échelon et le signal vibratoire anti-frottement appliquée à l'étape a) ; c) identifier la première fonction de transfert avec le retard pur d mesuré à l'étape b) et des paramètres de gain statique k, d'amortissement ξ, et de pulsation naturelle ωₙ calculés algébriquement à partir des paramètres de gain statique K, d'amortissement Π et de pulsation naturelle Ωₙ déterminés à l'étape b).

Selon une caractéristique particulière, la modélisation mathématique du système en boucle fermée est obtenue à l'aide d'une approximation en série de Taylor du second ordre.

Selon une autre caractéristique particulière, la phase d'identification comprend une étape préalable de réglage du signal vibratoire anti-frottement comprenant une mesure en boucle ouverte d'une hystérésis de l'actionneur due à des frottements secs.

Selon encore une autre caractéristique particulière, l'étape préalable de réglage comprend un réglage du signal vibratoire anti-frottement avec une amplitude au moins égale à une largeur de l'hystérésis et une fréquence haute ne perturbant pas le fonctionnement de l'actionneur.

L'invention concerne aussi un calculateur comportant une mémoire stockant des instructions de programme pour la mise en œuvre du procédé tel que décrit brièvement ci-dessus. Selon une forme de réalisation particulière, le calculateur est un calculateur de contrôle moteur d'un véhicule automobile.

L'invention concerne aussi un ensemble comprenant un moteur thermique et un calculateur de commande, le moteur thermique intégrant au moins un actionneur commandé en position dans sa boucle d'admission d'air et le calculateur de commande étant un calculateur comme indiqué ci-dessus.

L'invention concerne aussi un véhicule comprenant un ensemble comme indiqué ci-dessus.

D'autres avantages et caractéristiques de la présente invention apparaîtront plus clairement à la lecture de la description détaillée ci-dessous d'un mode de réalisation particulier de l'invention, en référence aux dessins annexés, dans lesquels :
[Fig.1] La Fig.1 est un bloc-diagramme de principe relatif à la mise en œuvre du procédé selon l'invention dans un moteur thermique de véhicule.
[Fig.2] La Fig.2 est un logigramme général de différentes étapes comprises dans un mode de réalisation particulier du procédé selon l'invention.
[Fig.3] La Fig.3 est un diagramme de principe relatif à la mesure d'une hystérésis due à des frottements secs dans un actionneur commandé en position.
[Fig.4] La Fig.4 est une courbe montrant une hystérésis due à des frottements secs dans un actionneur de position.
[Fig.5] La Fig.5 est un bloc-diagramme d'un système en boucle fermée utilisé dans le procédé de l'invention pour l'identification d'un modèle mathématique d'un actionneur commandé en position.
[Fig.6] La Fig.6 montre des équations mathématiques mises en application dans le procédé de l'invention.
[Fig.7] La Fig.7 montre des formes d'onde d'une commande du système en boucle fermée de la Fig.5 par une consigne en échelon, avec un signal vibratoire anti-frottement, et d'un signal de position sortant délivré en réponse par le système en boucle fermée.
[Fig.8] La Fig.8 montre un agrandissement de la forme d'onde du signal de position sortant de la Fig.7 et des mesures faites sur ce signal de position sortant pour l'identification d'un modèle mathématique de l'actionneur.

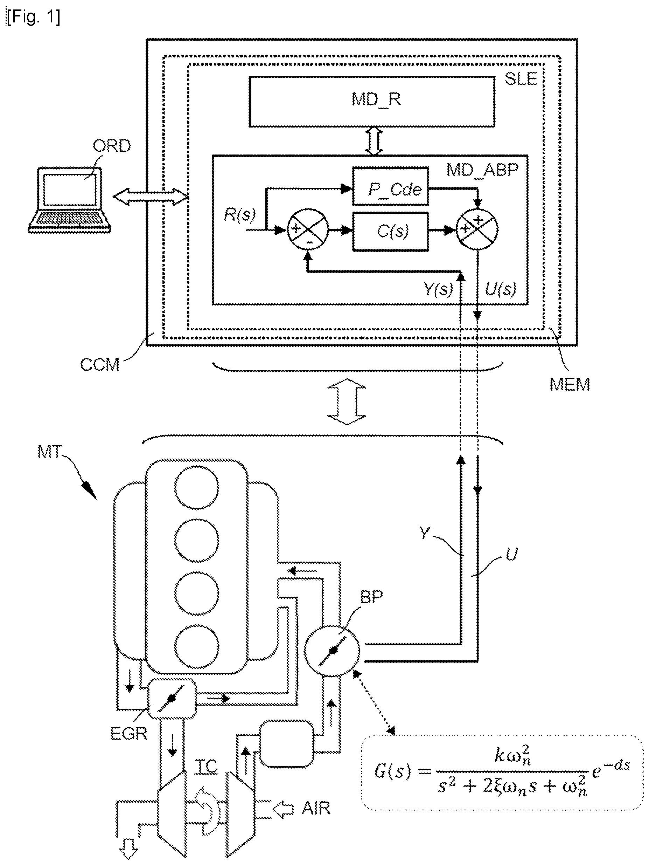

En référence à la Fig.1, dans la forme de réalisation particulière décrite ici, le procédé selon l'invention est mis en œuvre dans un calculateur de commande CCM d'un véhicule, tel qu'un calculateur de contrôle moteur, ayant à charge la commande d'un moteur thermique MT d'un véhicule.

Comme montré schématiquement à la Fig.1, le moteur thermique MT comporte une boucle d'admission d'air ayant notamment un boîtier de papillon des gaz BP, un turbocompresseur TC et une vanne EGR ayant des actionneurs commandés en position par des systèmes d'asservissement numériques.

Un système logiciel embarqué SLE est contenu dans une mémoire MEM du calculateur CCM et a pour fonction la commande générale du moteur thermique MT. Les communications de données pour la commande du moteur thermique MT, entre le système logiciel embarqué SLE et différents actionneurs et capteurs du moteur thermique MT, sont réalisées typiquement à travers un réseau de communication de données (non représenté) du véhicule, par exemple un bus de type CAN.

Le système logiciel embarqué SLE comprend différents modules logiciels dont un module logiciel MD_ABP, représenté à titre d'exemple à la Fig.1, implémentant un dispositif d'asservissement numérique dédié à la commande en position de l'actionneur du boîtier de papillon des gaz BP. Conformément à l'invention, le système logiciel embarqué SLE comprend également un module logiciel MD_R coopérant avec le dispositif d'asservissement numérique MD_ABP. Le module logiciel MD_R est chargé de la mise en œuvre du procédé selon l'invention par l'exécution d'instructions de code de programme par un processeur (non représenté) du calculateur CCM.

Le dispositif d'asservissement numérique MD_ABP est configurable dans plusieurs modes, sous la commande du module logiciel MD_R chargé de la mise en œuvre du procédé de l'invention, à savoir une configuration fonctionnelle et des configurations de réglage.

A la Fig.1, le dispositif d'asservissement numérique MD_ABP est montré schématiquement dans une configuration fonctionnelle, en boucle fermée. Dans cette configuration fonctionnelle, le modèle mathématique, dynamique et comportemental, de l'actionneur de position du boîtier de papillon des gaz BP a été identifié précédemment, comme cela sera décrit plus bas, au moyen du procédé de l'invention. La connaissance du modèle de l'actionneur du boîtier BP, représenté par la fonction de transfert G(s) avec s étant l'opérateur de Laplace, a permis de définir un correcteur C(s) typiquement de type dit « PID » (pour « Proportionnel-Intégral-Dérivé »). La définition du correcteur C(s), une fois identifiée la fonction de transfert G(s), est réalisée par des méthodes de calcul connues de l'homme du métier, qui ne seront pas décrites ici. Typiquement, une fonction de précommande P_Cde est intégrée également dans le dispositif d'asservissement numérique MD_ABP. De plus, une fonction anti-frottement (non représentée) pourra être intégrée dans le dispositif d'asservissement numérique MD_ABP, sous la forme d'un signal vibratoire de fréquence et amplitude prédéfinies.

Comme visible à la Fig.1, le dispositif d'asservissement numérique MD_ABP reçoit en entrée une consigne de position, désignée R(s) dans l'espace de Laplace, et délivre en sortie une commande de position, désignée U(s) et U respectivement dans l'espace de Laplace et l'espace temporel. En contre-réaction, le dispositif d'asservissement numérique MD_ABP reçoit également en entrée une information de retour de position Y délivrée par le boîtier de papillon des gaz BP, désignée Y(s) dans l'espace de Laplace, et représentant la position effective du papillon des gaz dans le boîtier BP suite à la consigne de position R(s).

Comme visible à la Fig.1, la fonction de transfert G(s) de l'actionneur du boîtier BP, à identifier par le procédé de l'invention, est une fonction de transfert du second ordre avec un retard pur, dans laquelle les paramètres k, ξ, ωₙ et d représentent respectivement le gain statique, l'amortissement, la pulsation naturelle et le retard pur de l'actionneur susmentionné en boucle ouverte.

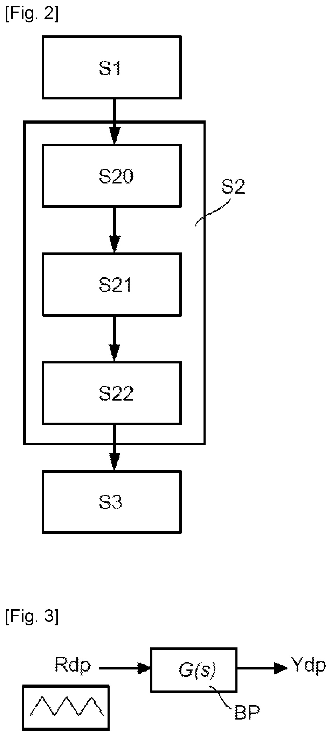

En référence aussi maintenant aux Figs.2 à 8, il est décrit en détail un mode de réalisation particulier du procédé de l'invention, dans le cadre traité ici du réglage du dispositif d'asservissement numérique MD_ABP assurant la commande en position de l'actionneur du boîtier de papillon des gaz BP.

Comme visible à la Fig.2, le procédé selon l'invention comprend essentiellement trois grandes étapes S1 à S3 dont l'exécution est gérée par le module logiciel MD_R. Le processus de réglage du dispositif d'asservissement numérique MD_ABP est lancé typiquement par un opérateur humain, chargé de la mise au point du dispositif, qui interagit avec le module logiciel MD_R via une interface homme-machine telle qu'un ordinateur ORD, ou un banc d'essai, hébergeant une application logicielle dédiée.

Les étapes S1 à S3 correspondent respectivement à A) une première étape de test en boucle ouverte de l'actionneur du boîtier BP, avec le dispositif d'asservissement numérique MD_ABP dans une première configuration de réglage, pour la définition d'un signal vibratoire anti-frottement utilisé dans le procédé de l'invention, B) une deuxième étape de test en boucle fermé de l'actionneur du boîtier BP, avec le dispositif d'asservissement numérique MD_ABP dans une deuxième configuration de réglage, pour identifier les paramètres k, ξ, ωₙ et d à partir de mesures sur une réponse à un échelon avec signal anti-frottement et de calculs algébriques, et C) une troisième étape de définition de la configuration fonctionnelle du dispositif d'asservissement numérique MD_ABP, connaissant les paramètres k, ξ, ωₙ et d.

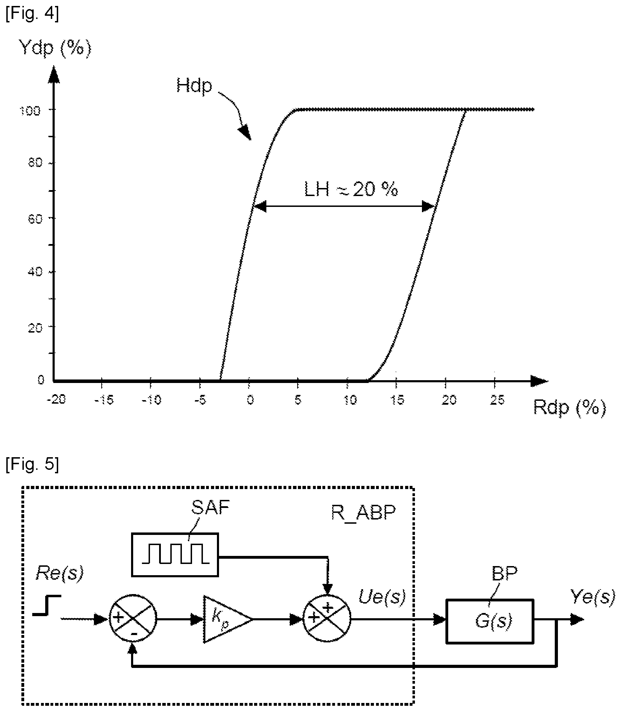

En référence plus particulièrement aux Figs.3 et 4, à l'étape S1, l'actionneur du boîtier BP est commandé directement en boucle ouverte, sous le contrôle du processus de traitement du module logiciel MD_R, par une consigne en double pente Rdp délivrée par le dispositif d'asservissement numérique MD_ABP dans la première configuration de réglage susmentionnée. La réponse de position effective Ydp de l'actionneur du boîtier BP, pour la consigne en double pente Rdp émise, est lue par le processus du module logiciel MD_R.

La consigne en double pente Rdp et la réponse de position effective Ydp de l'actionneur du boîtier BP sont analysées par le processus du module logiciel MD_R, de façon à identifier une relation, sous la forme d'une hystérésis, représentative des frottements secs s'opposant au mouvement fluide de l'actionneur du boîtier BP. La largeur de cette hystérésis permet de dimensionner l'amplitude que doit avoir le signal vibratoire anti-frottement pour vaincre les frottements secs. La fréquence du signal vibratoire anti-frottement à appliquer est extraite typiquement d'une base de connaissance, en fonction du type d'actionneur, cette fréquence devra être suffisamment haute pour ne pas perturber le fonctionnement de l'actionneur.

Un exemple de courbe d'hystérésis obtenue, Hdp, est montrée à la Fig.4. Les amplitudes en pourcents (%) de la consigne en double pente Rdp et de la réponse de position effective Ydp sont indiquées en abscisses et en ordonnées, respectivement, de la courbe d'hystérésis Hdp. La largeur LH de l'hystérésis est ici égale à environ 20% de l'amplitude de la consigne Rdp.

Comme visible à la Fig.2, l'étape S2 comprend essentiellement trois sous-étapes S20 à S22.

A la sous-étape S20, le processus du module logiciel MD_R commande la mise du dispositif d'asservissement numérique MD_ABP dans la deuxième configuration de réglage susmentionnée, désignée R_ABP à la Fig.5.

Dans cette configuration de réglage, l'actionneur du boîtier BP est commandé en boucle fermée avec un correcteur proportionnel kₚ et le signal vibratoire anti-frottement identifié à l'étape S1 et désigné ici SAF. La commande en boucle fermée avec le correcteur proportionnel kₚ vise à apporter une solution au comportement divergent en boucle ouverte de l'actionneur du boîtier BP, en forçant celui-ci à converger. Le signal vibratoire anti-frottement SAF est ajouté dans la commande de position Ue(s) appliquée à l'actionneur du boîtier BP. Le signal vibratoire anti-frottement SAF s'oppose à l'effet des frottements secs, en évitant un arrêt de l'actionneur à une position qui ne correspondrait pas à la commande, ce qui introduirait une erreur dans l'identification du gain statique de la fonction de transfert G(s).

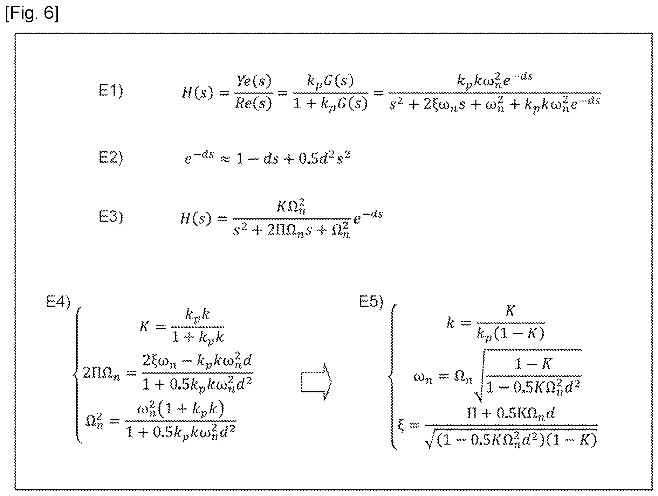

Dans cette configuration de réglage de la Fig.5, le système en boucle fermée, formé de l'actionneur du boîtier BP et du dispositif R_ABP, a pour fonction de transfert la fonction H(s) représentée par l'équation E1 à la Fig.6. Dans la fonction de transfert H(s) =Ye(s)/Re(s), Re(s) et Ye(s) sont respectivement l'entrée et la sortie du système bouclée, à savoir, la consigne de position et la réponse en position de l'actionneur à cette consigne, et les paramètres k, ξ, ωₙ et d sont, comme susmentionné, le gain statique, l'amortissement, la pulsation naturelle et le retard pur à identifier de l'actionneur en boucle ouverte.

La fonction de transfert H(s) reste une fonction du second ordre grâce à l'utilisation d'un correcteur proportionnel kₚ. Cependant, cette fonction de transfert H(s) n'est pas rationnelle du fait de la présence du terme e^{-ds} dans le dénominateur de la fonction H(s). Pour pouvoir réaliser des calculs algébriques, il est nécessaire d'éliminer le terme e^{-ds} dans le dénominateur de la fonction H(s) en le remplaçant par une fonction rationnelle. Le choix est fait dans l'invention d'utiliser l'approximation en série de Taylor du second ordre, donnée par l'équation E2 à la Fig.6, pour remplacer le terme e^{-ds}. Des simulations comparatives, réalisées par l'entité inventive et basées sur le diagramme de Bode (module et phase), entre la fonction de transfert originale et la fonction de transfert approximée, ont montrées que l'erreur due à cette approximation est négligeable dans la bande passante du système bouclée. Le choix d'approximer le terme e^{-ds} par la série de Taylor du second ordre permet de conserver le second ordre pour la fonction de transfert H(s) approximée, ce qui ne serait pas le cas avec l'approximation de Padé du premier ordre communément utilisé pour le terme e^{-ds}.

La fonction de transfert H(s) obtenue avec l'approximation en série de Taylor est donnée par l'équation E3 à la Fig.6. Cette équation E3 est du second ordre et comprend des paramètres de gain statique K, d'amortissement Π, de pulsation naturelle Ωₙ et de retard pur d.

Par identification terme à terme des équations E1 et E3 de la fonction de transfert H(s), il est obtenu les équations E4 à la Fig.6 qui lient les paramètres K, Π et Ωₙ aux paramètres k, ξ et ωₙ à identifier. Par inversion des équations E4, il est obtenu les égalités E5 à la Fig.6 qui donnent les paramètres à identifier k, ξ et ωₙ en fonction des paramètres K, Π, Ωₙ, d et kₚ.

Les sous-étapes S21 et S22 sont respectivement une sous-étape d'obtention par mesure et calcul des paramètres K, Π, Ωₙ et d et une sous-étape de calcul des paramètres à identifier k, ξ et ωₙ en fonction des valeurs déterminées de K, Π, Ωₙ, d et du gain kₚ connu.

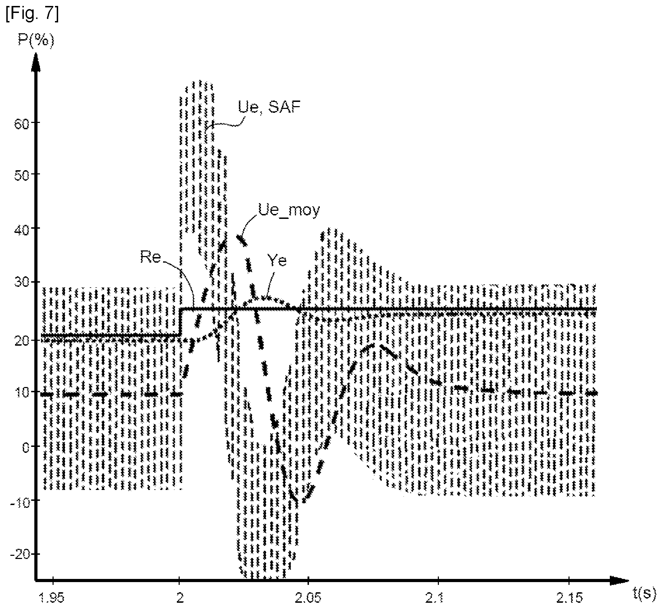

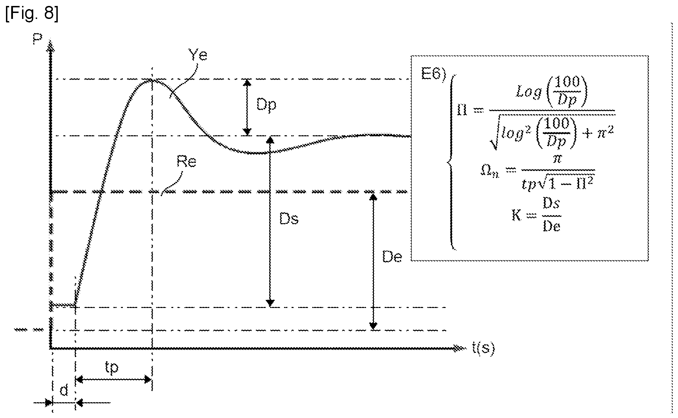

En référence à la Fig.5 et aux Figs.7 et 8, les paramètres K, Π, Ωₙ et d sont obtenus à la sous-étape S21 à partir de mesures effectuées sur un signal de position sortant Ye (position de l'actionneur) délivré par le système bouclé configuré à la sous-étape S20 (R_ABP, Fig.5) en réponse à une consigne en échelon Re appliquée en entrée du système bouclé, avec le signal vibratoire anti-frottement SAF présent dans la commande Ue de l'actionneur.

A la Fig.7 sont montrés des exemples de formes d'onde de la consigne en échelon Re, du signal de position sortant Ye, ainsi que de la commande Ue, SAF, et de la commande moyennée correspondante Ue_moy. La position P en pourcents (%) est indiquée dans l'axe des ordonnées de ces formes d'onde.

Comme visible à la Fig.8, sur le signal de position sortant Ye sont mesurés le retard d, un temps de pic tp, un dépassement de pic Dp et un delta sortant Ds correspondant à un delta entrant De de la consigne en échelon Re. Le temps de pic tp est le temps de montée du signal de position sortant Ye jusqu'à atteindre le dépassement de pic Dp mesuré par rapport au delta sortant Ds. Le retard d à identifier est donc mesuré directement sur le signal de position sortant Ye. Les paramètres K, Π et Ωₙ sont calculés avec les égalités connues E6) montrées à la Fig.8, à partir des valeurs de tp, Dp, Ds et De.

A la sous-étape S22, les paramètres k, ξ et ωₙ de la fonction de transfert G(s) sont calculés avec les égalités E5 montrées à la Fig.6, à partir des valeurs de K, Π, Ωₙ et d obtenues à la sous-étape S21. A l'issue de la sous-étape S22, les différents paramètres de la fonction de transfert G(s) sont identifiés et la modélisation mathématique de l'actionneur du boîtier BP est donc achevée.

A l'étape S3, le processus du module logiciel MD_R calcule, avec la fonction de transfert G(s) identifiée à l'étape S2, un correcteur C(s) adapté pour le dispositif d'asservissement numérique MD_ABP dans sa configuration fonctionnelle montrée à la Fig.1. Les méthodes de calcul des correcteurs sont connues de l'homme du métier et ne sont donc pas détaillées ici.

Le procédé de l'invention trouve une application privilégiée, mais non exclusive, dans la commande en position des actionneurs des moteurs thermique de type essence et Diesel. La présente invention permet d'améliorer la robustesse et les performances des asservissements de position des actionneurs, ainsi que leurs temps de mise en œuvre et de validation. Le procédé de l'invention est totalement automatisable et le processus de réglage qui en résulte peut-être mis en pratique aisément par une personne peu expérimentée.

L'invention ne se limite pas au mode de réalisation particulier qui a été décrit ici à titre d'exemple. L'homme du métier, selon les applications de l'invention, pourra apporter différentes modifications et variantes entrant dans le champ de protection de l'invention.

## Revendications

1. Procédé mis en œuvre par ordinateur de réglage d'un dispositif d'asservissement en position (MD_ABP) d'un actionneur (BP) comprenant une phase d'identification (S1, S2) d'un modèle mathématique dudit actionneur (BP) sous la forme d'une première fonction de transfert (G(s)) du second ordre avec un retard pur d et une phase de calcul (S3) d'un correcteur (C(s)) dudit dispositif d'asservissement en position (MD_ABP) en utilisant ledit modèle mathématique (G(s)), **caractérisé en ce que** ladite phase d'identification (S1, S2) comprend les étapes de a) commander (S21) ledit actionneur (BP) dans un système en boucle fermée (R_ABP, BP) avec une consigne en échelon (Re) et en appliquant un signal vibratoire anti-frottement (SAF), ledit système en boucle fermée (R_ABP, BP) comprenant un simple correcteur proportionnel (kₚ) et étant modélisé mathématiquement sous la forme d'une deuxième fonction de transfert du second ordre avec ledit retard pur d (H(s)) ; b) déterminer (S22, E6) des paramètres de gain statique K, d'amortissement Π, de pulsation naturelle Ωₙ et de retard pur d de ladite deuxième fonction de transfert (H(s)) à partir de mesures (De, Ds, d, tp, Dp) sur un signal de position sortant (Ye) dudit système en boucle fermée (R_ABP, BP) délivré par celui-ci en réponse à la commande avec ladite consigne en échelon (Re) et ledit signal vibratoire anti-frottement (SAF) appliquée à l'étape a) ; et c) identifier (S23, E5) ladite première fonction de transfert (G(s)) avec ledit retard pur d mesuré à l'étape b) et des paramètres de gain statique k, d'amortissement ξ, et de pulsation naturelle ωₙ calculés algébriquement (E5) à partir des paramètres de gain statique K, d'amortissement Π et de pulsation naturelle Ωₙ déterminés à l'étape b).

2. Procédé selon la revendication 1, **caractérisé en ce que** la modélisation mathématique dudit système en boucle fermée (R_ABP, BP) est obtenue à l'aide d'une approximation en série de Taylor du second ordre (E2).

3. Procédé selon la revendication 1 ou 2, **caractérisé en ce que** ladite phase d'identification comprend une étape préalable de réglage (S1) dudit signal vibratoire anti-frottement (SAF) comprenant une mesure en boucle ouverte (Rdp, Ydp) d'une hystérésis (Hdp) dudit actionneur (BP) due à des frottements secs.

4. Procédé selon la revendication 3, **caractérisé en ce que** ladite étape préalable de réglage (S1) comprend un réglage dudit signal vibratoire anti-frottement (SAF) avec une amplitude au moins égale à une largeur (LH) de ladite hystérésis (Hdp) et une fréquence haute ne perturbant pas le fonctionnement dudit actionneur (BP).

5. Calculateur (CCM) comportant une mémoire (MEM) stockant des instructions de programme (MD_R) pour la mise en œuvre du procédé selon l'une quelconque des revendications 1 à 4.

6. Calculateur selon la revendication 5, **caractérisé en ce que** ledit calculateur est un calculateur de contrôle moteur (CCM) d'un véhicule.

7. Ensemble comprenant un moteur thermique (MT) et un calculateur de commande (CCM), ledit moteur thermique (MT) intégrant au moins un actionneur (BP, EGR, TC) commandé en position dans sa boucle d'admission d'air, **caractérisé en ce que** ledit calculateur de commande est un calculateur (CCM) selon la revendication 5 ou 6.

8. Véhicule **caractérisé en ce qu'**il comprend un ensemble (MT, CCM) selon la revendication 7.

## Patentansprüche

1. Rechnerimplementiertes Verfahren zum Einstellen einer Positionsregelungsvorrichtung (MD_ABP) eines Aktuators (BP), umfassend eine Identifikationsphase (S1, S2) eines mathematischen Modells des Aktuators (BP) in Form einer ersten Übertragungsfunktion (G(s)) zweiter Ordnung mit einer reinen Verzögerung d und eine Phase zum Berechnen (S3) eines Reglers (C(s)) der Positionsregelungsvorrichtung (MD_ABP) unter Verwendung des mathematischen Modells (G(s)), **dadurch gekennzeichnet, dass** die Identifikationsphase (S1, S2) die folgenden Schritte umfasst: a) Ansteuern (S21) des Aktuators (BP) in einem geschlossenen Regelkreis (R_ABP, BP) mit einem Sprungsollwert (Re) und unter Anwendung eines Anti-Reibungs-Schwingungssignals (SAF), wobei der geschlossene Regelkreis (R_ABP, BP) einen einfachen Proportionalregler (kp) umfasst und mathematisch in Form einer zweiten Übertragungsfunktion zweiter Ordnung mit der reinen Verzögerung d (H(s)) modelliert ist; b) Bestimmen (S22, E6) von Parametern eines statischen Gewinns K, einer Dämpfung Π, einer Eigenkreisfrequenz Ωₙ und einer reinen Verzögerung d der zweiten Übertragungsfunktion (H(s)) aus Messungen (De, Ds, d, tp, Dp) eines Ausgangspositionssignals (Ye) des geschlossenen Regelkreises (R_ABP, BP), das von diesem als Antwort auf die Ansteuerung mit dem Sprungsollwert (Re) und dem in Schritt a) angewendeten Anti-Reibungs-Schwingungssignal (SAF) geliefert wird; und c) Identifizieren (S23, E5) der ersten Übertragungsfunktion (G(s)) mit der in Schritt b) gemessenen reinen Verzögerung d und Parametern eines statischen Gewinns k, einer Dämpfung ξ und einer Eigenkreisfrequenz ωn, die algebraisch (E5) aus den in Schritt b) bestimmten Parametern des statischen Gewinns K, der Dämpfung Π und der Eigenkreisfrequenz Ωn berechnet werden.

2. Verfahren nach Anspruch 1, **dadurch gekennzeichnet, dass** die mathematische Modellierung des geschlossenen Regelkreises (R_ABP, BP) mittels einer Taylorreihen-Approximation zweiter Ordnung (E2) erhalten wird.

3. Verfahren nach Anspruch 1 oder 2, **dadurch gekennzeichnet, dass** die Identifikationsphase einen vorhergehenden Schritt zum Einstellen (S1) des Anti-Reibungs-Schwingungssignals (SAF) umfasst, der eine Messung im offenen Regelkreis (Rdp, Ydp) einer Hysterese (Hdp) des Aktuators (BP) aufgrund trockener Reibung umfasst.

4. Verfahren nach Anspruch 3, **dadurch gekennzeichnet, dass** der vorhergehende Einstellschritt (S1) eine Einstellung des Anti-Reibungs-Schwingungssignals (SAF) mit einer Amplitude umfasst, die mindestens gleich einer Breite (LH) der Hysterese (Hdp) ist, sowie mit einer hohen Frequenz, die den Betrieb des Aktuators (BP) nicht stört.

5. Rechner (CCM) mit einem Speicher (MEM), der Programmanweisungen (MD_R) zur Durchführung des Verfahrens nach einem der Ansprüche 1 bis 4 speichert.

6. Rechner nach Anspruch 5, **dadurch gekennzeichnet, dass** der Rechner ein Motorsteuergerät (CCM) eines Fahrzeugs ist.

7. Anordnung umfassend einen Verbrennungsmotor (MT) und einen Steuerrechner (CCM), wobei der Verbrennungsmotor (MT) mindestens einen Aktuator (BP, EGR, TC) umfasst, der in seiner Luftansaugschleife positionsgeregelt ist, **dadurch gekennzeichnet, dass** der Steuerrechner ein Rechner (CCM) nach Anspruch 5 oder 6 ist.

8. Fahrzeug, **dadurch gekennzeichnet, dass** es eine Anordnung (MT, CCM) nach Anspruch 7 umfasst.

## Claims

1. Computer-implemented method for adjusting a position control device (MD_ABP) of an actuator (BP) comprising an identification phase (S1, S2) of a mathematical model of said actuator (BP) in the form of a first transfer function (G(s)) of second order with a pure delay d and a phase of calculating (S3) a controller (C(s)) of said position control device (MD_ABP) using said mathematical model (G(s)), **characterized in that** said identification phase (S1, S2) comprises the steps of: a) controlling (S21) said actuator (BP) in a closed-loop system (R_ABP, BP) with a step setpoint (Re) and by applying an anti-friction vibratory signal (SAF), said closed-loop system (R_ABP, BP) comprising a simple proportional controller (kp) and being mathematically modeled in the form of a second second-order transfer function with said pure delay d (H(s)); b) determining (S22, E6) parameters of static gain K, damping Π, natural pulsation Ωn and pure delay d of said second transfer function (H(s)) from measurements (De, Ds, d, tp, Dp) on an output position signal (Ye) of said closed-loop system (R_ABP, BP) delivered by the latter in response to the control with said step setpoint (Re) and said anti-friction vibratory signal (SAF) applied in step a); and c) identifying (S23, E5) said first transfer function (G(s)) with said pure delay d measured in step b) and parameters of static gain k, damping ξ, and natural pulsation ωn calculated algebraically (E5) from the parameters of static gain K, damping Π and natural pulsation Ωn determined in step b).

2. Method according to claim 1, **characterized in that** the mathematical modeling of said closed-loop system (R_ABP, BP) is obtained using a second-order Taylor series approximation (E2).

3. Method according to claim 1 or 2, **characterized in that** said identification phase comprises a preliminary step of adjusting (S1) said anti-friction vibratory signal (SAF) comprising an open-loop measurement (Rdp, Ydp) of a hysteresis (Hdp) of said actuator (BP) due to dry friction.

4. Method according to claim 3, **characterized in that** said preliminary adjustment step (S1) comprises an adjustment of said anti-friction vibratory signal (SAF) with an amplitude at least equal to a width (LH) of said hysteresis (Hdp) and a high frequency not disturbing the operation of said actuator (BP).

5. Computer (CCM) comprising a memory (MEM) storing program instructions (MD_R) for implementing the method according to any one of claims 1 to 4.

6. Computer according to claim 5, **characterized in that** said computer is an engine control computer (CCM) of a vehicle.

7. Assembly comprising an internal combustion engine (MT) and a control computer (CCM), said internal combustion engine (MT) integrating at least one actuator (BP, EGR, TC) controlled in position in its air intake loop, **characterized in that** said control computer is a computer (CCM) according to claim 5 or 6.

8. Vehicle **characterized in that** it comprises an assembly (MT, CCM) according to claim 7.
